# FASCICULE DE BREVET EUROPEEN

(11) **EP 2 550 606 B1**
(45) Date de publication et mention de la délivrance du brevet: **02.07.2014**
(21) Numéro de dépôt: 11709737.8
(22) Date de dépôt: 23.03.2011
(51) Int. Cl.: H04L 29/08, H04L 29/06, G06F 17/30

(54) **CONVERTISSEUR DE DONNEES**
DATEN KONVERTER
DATA CONVERTER

(30) Priorité: 25.03.2010 FR 1052167
(43) Date de publication de la demande: 30.01.2013
(73) Titulaire: SARL Creagest, 1329 Luxembourg (LU)
(72) Inventeur: MBAYE, Kangolongo Alexandra, 93250 Villemomble (FR)
(74) Mandataire: Bioret, Ludovic
(86) Numéro de dépôt international: PCT/EP2011/054495
(87) Numéro de publication internationale: WO 2011/117321

(56) Documents cités:
- EP-A1- 0 936 788

## Description

La présente invention concerne l'échange de données entre deux appareils utilisant des formats de représentation des données qui sont différents.

Tout appareil qui traite de la donnée l'enregistre dans sa mémoire ou la transmet selon un format de représentation des données qui spécifie leur emplacement dans la mémoire ou dans le flux considéré, leur structure et leur contenu informatif. Le format de représentation doit être formalisé par un descripteur pour permettre à un utilisateur externe d'accéder aux données voulues.

De façon classique, le descripteur est fourni sous la forme d'un document écrit de type spécification technique. Le concepteur du logiciel d'exploitation des données dans un appareil externe peut ainsi identifier les données utiles et développer les fonctions d'interface associées pour les localiser, y accéder et en effectuer une lecture fructueuse, c'est-à-dire avec compréhension de leur contenu. Le concepteur peut ainsi pénétrer efficacement dans le "monde" de l'appareil source des données utiles, pour ensuite les traduire dans son propre "monde", c'est-à-dire son propre format de représentation des données. Dans la suite de cet exposé, on verra qu'un appareil dit de stockage de données peut être la source des données ou bien le récepteur des données. Les exemples ci-dessous représentent, pour la simplicité de l'exposé, le cas d'un appareil de stockage qui est source de données.

Il existe plusieurs approches pour traiter ce problème de conversion de formats de représentation.

### Approche par diffusion de spécifications écrites

Une première approche, de type « adaptatif », consiste à laisser la charge de l'adaptation au concepteur de l'appareil "externe", récepteur et utilisateur des données. Le concepteur de l'appareil source, ne fait que fournir la spécification de représentation des données au concepteur de l'appareil utilisateur. Celui-ci développe alors, d'après le format de représentation des données ainsi acquis, un pilote d'interface qui permet de traiter des données représentées dans ce format. L'inconvénient réside dans le fait que le concepteur utilisateur doit renouveler son effort d'appropriation du format source chaque fois que celui-ci évolue, et ceci pour chaque appareil source dont il souhaite convertir la donnée.

### Approche par recours à un format standard

Une seconde approche, de type « référence à un standard », prévoit que le concepteur de l'appareil source développe une fonction d'interface pour transcrire ses données dans un format de représentation standard. Le concepteur de l'appareil utilisateur développe, de son côté, une fonction d'interface vers ce standard. Outre le fait que ce standard fait souvent perdre l'information, il faut que les deux concepteurs fassent l'effort d'appropriation d'un format tiers, standard, et tiennent à jour leur fonction d'interface.

### Approche par mise à disposition d'un pilote logiciel

Une troisième approche, de type « pilote », prévoit que le concepteur de l'appareil source développe une fonction d'interface permettant de traiter directement les données qu'il exporte. Cette fonction d'interface est encapsulée dans un programme exécutable par le système d'exploitation de l'appareil utilisateur. L'inconvénient est qu'il faut développer un programme spécifique pour chaque système d'exploitation, et que ce programme doit être diffusé vers les utilisateurs potentiels.

Le document EP 0 936 788 A1 enseigne un procédé de conversion de format, dans lequel un format de source est comparé à un premier jeu de formats cibles qu'un premier convertisseur peut traiter. En cas d'échec, c'est-à-dire si le premier jeu de formats disponibles ne comporte pas celui de l'utilisateur destinataire final, les données de la source sont converties en un format intermédiaire, constitué par l'un des formats du premier jeu, qui peut être reconnu par un deuxième convertisseur, aval. Les données au format intermédiaire sont alors, de même, comparées à un deuxième jeu de formats du deuxième convertisseur, et le processus se répète de façon itérative un nombre déterminé de fois pour tenter d'établir un chaînage aboutissant à une conversion finale au format destinataire. Un échec est alors déclaré en cas d'insuccès. Ce document présente un enseignement du type de la deuxième approche, c'est-à-dire qu'il s'agit d'une utilisation de formats connus, standards. En d'autres termes, s'agissant de formats figés, "quantifiés", il est impossible de s'écarter d'un standard. Cet enseignement porte donc sur une utilisation d'un ou plusieurs convertisseurs en cascade, et aucunement sur la création d'un convertisseur adapté au besoin qui se présente.

La présente invention vise à faciliter l'adaptation nécessaire entre deux appareils ayant des formats différents de représentation de leurs données.

À cet effet, l'invention concerne, tout d'abord, un procédé d'élaboration d'un convertisseur de données entre un appareil source, dans lequel des données source ont été stockées selon une spécification de représentation source prédéterminée, et un appareil utilisateur disposant d'une spécification de représentation utilisateur pour l'exploitation de données utilisateur, procédé caractérisé par le fait que :
- on établit une paire de descripteurs, respectivement source et utilisateur, interprétables par machine, des spécifications de représentation respectivement source et utilisateur, et
- on effectue une comparaison entre le descripteur source et le descripteur utilisateur pour en déterminer une discordance mutuelle servant à établir un bloc d'interprétation des données par machine, comportant des moyens de commande de conversion entre des éléments de données homologues de respectivement le descripteur source et le descripteur utilisateur.

Ainsi, l'un des appareils « se présente » à l'autre, c'est-à-dire que son descripteur propre est mis à disposition. Les discordances ci-dessus peuvent, par exemple et à titre non limitatif, porter sur au moins l'un des éléments d'un groupe comportant des informations sémantiques, des informations syntaxiques, des informations de structure, des informations de relations d'inclusion.

Par rapport au document cité ci-dessus, l'invention offre un mode de fonctionnement sans échec puisque le bloc d'interprétation permet, d'emblée, de compenser la discordance mutuelle, et ceci sans nécessité d'une cascade de jeux de convertisseurs, ni même d'un premier jeu de convertisseurs, puisque le bloc d'interprétation assure l'adaptation, ou mise à niveau, nécessaire. Cette adaptation n'est donc pas une recherche d'un convertisseur qui conviendrait mais directement la création de l'outil de conversion qui convient.

Une originalité du procédé de l'invention est que l'on peut se passer d'un opérateur humain pour mettre en relation deux appareils nouveaux, puisque les descripteurs sont interprétables par machine.

Une autre originalité réside dans le fait que, par rapport au deuxième cas ci-dessus, d'approche par norme ou standard, la référence tierce ne se situe qu'au niveau des descripteurs considérés, et aucunement au niveau du format de représentation de la donnée qui doit être converti. La référence au niveau de la donnée est liée au domaine d'application de la donnée considérée - il existe un standard pour chaque domaine - mais la référence au niveau du descripteur concerne uniquement le domaine d'application de la conversion de donnée - il est possible de créer un seul standard. On peut ainsi relier deux mondes hétéroclites par un volume de communication, situé à cheval sur leur frontière et apte à établir un brassage de relations qui va permettre la comparaison entre les deux descripteurs et la construction d'une méthode de transformation.

Le descripteur, mis à disposition, est donc un élément didactique qui permet de «reconnaître» l'appareil connecté et de suivre toute évolution de ses caractéristiques pour effectuer l'adaptation voulue.

Les étapes du procédé peuvent être effectuées, en tout ou partie, dans l'un ou l'autre des appareils, voire même un appareil autre servant d'outil.

Dans un premier cas, et en supposant que les données sont effectivement transférées dans le cadre du procédé ci-après, de transfert de données selon l'invention exploitant le présent procédé d'élaboration d'un convertisseur, l'appareil source, sur requête ou bien spontanément, émet les données, ces données restant présentées selon le format source. Un tel mode de fonctionnement peut être qualifié de PUSH de niveau haut, c'est-à-dire que l'appareil source ne prend pas en compte les spécificités de l'appareil utilisateur : il exporte ses données dans son mode natif et, "à côté", il spécifie leur structure, leur syntaxe et la sémantique associée. L'appareil source n'intervient donc qu'au début du procédé d'élaboration du convertisseur, juste pour fournir son descripteur, et le contenu de ses données. Le reste des étapes du procédé d'élaboration d'un convertisseur va donc être effectué en utilisant en outre la spécification de représentation utilisateur.

Il n'est toutefois pas exclu que, comme le convertisseur est un outil, pour rendre les données exploitables par l'utilisateur, l'appareil utilisateur renonce à exploiter tout ou partie de cet outil et transfère son descripteur à l'appareil source, qui sera donc chargé de l'utiliser lors de la conversion des données.

Le second cas est un dual du premier cas, c'est-à-dire que c'est l'appareil source qui traite les étapes du procédé d'élaboration d'un convertisseur et qui utilise ensuite cet outil, ou, éventuellement, qui le transfère à l'appareil utilisateur.

Dans un cas comme dans l'autre, lors de l'élaboration du convertisseur, chaque appareil est maître puisque son descripteur intervient dans l'élaboration du convertisseur. C'est donc une double commande.

Par contre, lors de la transmission des données selon le procédé de transfert de données selon l'invention, l'appareil utilisateur sera esclave dans le premier cas, puisqu'il utilisera un convertisseur qui dépend de l'appareil source. L'appareil source ne sera toutefois qu'un maître virtuel, puisqu'il n'est intervenu qu'au niveau amont, d'élaboration de l'outil que constitue le convertisseur, et aucunement au niveau aval, de l'utilisation de cet outil pour transmettre les données.

De façon préférée, on établit le bloc d'interprétation en établissant et en y intégrant :
- un premier bloc, de commande de lecture des éléments de données source par interprétation d'informations sur leur structure contenues dans le descripteur source,
- un deuxième bloc, appartenant aux dits moyens de commande de conversion entre des éléments de données homologues, par rapprochement d'informations sémantiques et/ou syntaxiques contenues dans lesdits descripteurs des spécifications, et
- un troisième bloc, de commande d'écriture des éléments de données convertis par interprétation d'informations sur leur structure contenues dans le descripteur utilisateur.

Le deuxième bloc, de conversion entre les dits descripteurs des formats, sert donc de pivot adaptateur entre la lecture côté source et l'écriture côté utilisateur.

Le cas échéant, on établit, en aval du bloc d'interprétation, une table de conversion de paramètres.

La table de conversion met en relation les éléments de données homologues dans les deux appareils. La table de conversion consigne un ensemble de paramètres spécifiques aux données et notamment des dénominations des éléments de données, leurs adresses mémoire et des algorithmes sémantiques et syntaxiques nécessaires à leur conversion.

Il est commode que, pour effectuer le rapprochement d'informations sémantiques, un graphe sémantique soit établi pour représenter un lien entre deux thesaurus de respectivement l'appareil source et l'appareil utilisateur.

Il est ainsi établi une arborescence dans laquelle on peut effectuer un cheminement pour trouver un chemin allant d'un élément de donnée de l'un des appareils à un élément de donnée identique situé dans l'autre appareil. Par exemple, la vitesse du véhicule peut être désignée par la désignation « car_speed » dans un appareil et par la désignation « vitesse_véhicule » dans l'autre appareil. Le graphe sémantique permettra d'établir un chemin entre les deux termes et de caractériser ce lien.

En pareil cas, de préférence, d'après le graphe sémantique, il est établi un algorithme de conversion de niveau sémantique, qui est intégré dans le bloc d'interprétation

L'algorithme est une simple égalité lorsque les termes sont équivalents mais il peut être plus élaboré. Par exemple, si l'élément de donnée « car_speed » peut être exprimé en "miles per hour" alors que l'élément de donnée « vitessewéhicule » peut être exprimé en kilomètres par heure, l'algorithme de conversion consistera en un facteur de multiplication.

Ainsi, d'une façon générale, le graphe sémantique permet, par utilisation d'un logiciel, la recherche de termes équivalents, ou d'une même lignée.

Avantageusement, un schéma structurel des données source est établi afin de servir à l'élaboration du bloc d'interprétation.

Le schéma structurel permet ainsi de localiser un élément de la donnée pour l'extraire de la donnée source et ensuite interpréter et convertir sa syntaxe pour l'écrire dans la donnée utilisateur.

De préférence, d'après une paire de schémas structurels respectifs de l'appareil source, respectivement utilisateur, il est établi un algorithme de conversion de niveau syntaxique, qui est intégré dans le bloc d'interprétation.

Par exemple, si l'élément de donnée « car_speed » est codé dans un format binaire « pur » alors que l'élément de donnée «vitesse_véhicule» est codé en format texte, l'algorithme de conversion consistera en une transformation binaire vers texte.

L'invention concerne aussi un procédé de transfert de données entre un appareil source et un appareil utilisateur, caractérisé par le fait que :
- on élabore un convertisseur de données au moyen du procédé d'élaboration selon l'invention,
- on établit une connexion entre l'appareil source et l'appareil utilisateur, et
- on transfère les données, avec conversion au moyen du dit convertisseur de données.

Comme évoqué plus haut, le transfert peut intervenir suite à une requête de lecture, émise par l'appareil utilisateur, ou il peut s'agir d'une diffusion spontanée des données.

Avantageusement, au moins une partie des étapes du procédé de transfert de données est effectuée au niveau d'un bloc logique frontal de l'appareil source et / ou d'un bloc logique frontal de l'appareil utilisateur.

L'invention porte aussi sur une application du procédé de conversion de données selon l'invention, dans laquelle on accède aux données d'un réseau local de véhicule motorisé.

Par exemple, une valise de test universelle peut ainsi accéder à un bus du réseau local d'un véhicule automobile, pour lire certaines données ou, réciproquement, écrire de nouvelles données, à des emplacements et selon des formats qui conviennent, et ceci quel qu'en soit le modèle ou la marque du véhicule.

Selon un autre exemple, un appareil nomade peut récupérer des données de niveau de jauge à carburant, de vitesse ou de position du volant provenant du réseau local du véhicule automobile pour enrichir ses applications logicielles d'aide à la conduite et de navigation GPS.

On notera que, dans cette application et dans d'autres, la liaison de transfert de données peut être de nature physique quelconque, par exemple filaire, optique, radio, courte portée par transpondeur.

L'invention concerne aussi une application du procédé de conversion de données selon l'invention, dans laquelle un lecteur de moyen d'identification, par exemple un badge, effectue une reconnaissance d'un contenu du moyen d'identification grâce à une conversion selon ledit procédé.

Le lecteur est ainsi universel en ce sens qu'il peut lire des badges à divers formats de données et avec des architectures de stockage diverses.

L'invention concerne aussi une application du procédé de transfert de données selon l'invention, dans lequel un appareil source de télécommandes transmet une télécommande à un appareil utilisateur, la télécommande émise étant convertie par le convertisseur de données pour être exploitable.

L'appareil utilisateur de télécommandes est ainsi universel. Il peut commander tout type d'appareil, par exemple domestique ou industriel.

Comme appareils domestiques, on peut par exemple penser à des téléviseurs de divers types, des chaînes hi-fi, des fours, des machines à laver la vaisselle ou le linge, des appareils de climatisation, ainsi qu'à des moteurs de manoeuvre de portes ou de volets. Comme appareils industriels, on peut par exemple penser à des variateurs de vitesse ou des automates de programmation.

L'invention porte aussi sur un équipement de mise en oeuvre du procédé d'élaboration d'un convertisseur de données selon l'invention, comportant :
- des moyens de stockage d'une paire de descripteurs, respectivement source et utilisateur, interprétables par machine, des spécifications respectivement source et utilisateur, et
- des moyens comparateurs agencés pour effectuer une comparaison entre le descripteur source et le descripteur utilisateur, et en déterminer une discordance mutuelle servant à établir un bloc de conversion des données par machine, comportant des moyens de commande de conversion entre des éléments de données homologues de respectivement le descripteur source et le descripteur utilisateur.

Avantageusement, l'équipement comporte des moyens de corrélation agencés pour établir un dit graphe sémantique et / ou un dit algorithme de conversion de niveau sémantique et / ou syntaxique.

L'invention concerne aussi un produit programme d'ordinateur apte à être téléchargé à travers un réseau de communication et / ou enregistré sur un medium lisible par ordinateur et / ou exécutable par un processeur, caractérisé par le fait qu'il comprend des instructions de code de programme pour mettre en oeuvre le procédé d'élaboration d'un convertisseur de données selon l'invention, lorsque le dit programme est exécuté par un ordinateur.

L'invention concerne en outre un medium de stockage de données lisible par ordinateur, stockant un programme d'ordinateur comprenant un ensemble d'instructions, exécutables par un ordinateur, pour mettre en oeuvre le procédé d'élaboration d'un convertisseur de données selon l'invention.

L'invention sera mieux comprise à l'aide de la description suivante de diverses déclinaisons du présent concept inventif, à savoir le procédé d'élaboration d'un convertisseur de données, le procédé de transfert de données qui l'utilise, une application de celui-ci dans un réseau embarqué à bord d'un véhicule automobile, l'équipement de mise en oeuvre du procédé d'élaboration d'un convertisseur de données, des produits programmes d'ordinateur et des médiums de stockage de données relatifs à l'un ou l'autre des procédés de l'invention, en référence au dessin annexé, dans lequel :
- la figure 1 est un schéma synoptique des constituants voulus, selon l'invention, d'un appareil source de données,
- la figure 2 est un schéma synoptique des constituants voulus, selon l'invention, d'un appareil utilisateur de données,
- la figure 3 est un schéma synoptique de blocs fonctionnels logiques des deux appareils, qui collaborent pour permettre un transfert de données de l'un vers l'autre, avec une conversion selon l'invention, les rendant utilisables,

- la figure 4 est un schéma partiel plus détaillé, illustrant des blocs fonctionnels servant à la conversion,
- la figure 5 est un organigramme exposant des étapes d'initialisation de connexion logique, dans l'hypothèse où les données sont converties après transfert,
- la figure 6 est un organigramme illustrant une séquence de préparation d'une table de conversion,
- la figure 7 est un organigramme illustrant des étapes de mise à disposition d'un élément de donnée converti,
- la figure 8 représente un graphe sémantique correspondant à une ontologie de messagerie dans un réseau embarqué de véhicule automobile,
- la figure 9 représente un extrait d'une table de conversion pour deux éléments de données homologues, et
- la figure 10 représente la structure d'une trame de données provenant d'un réseau local d'un véhicule.

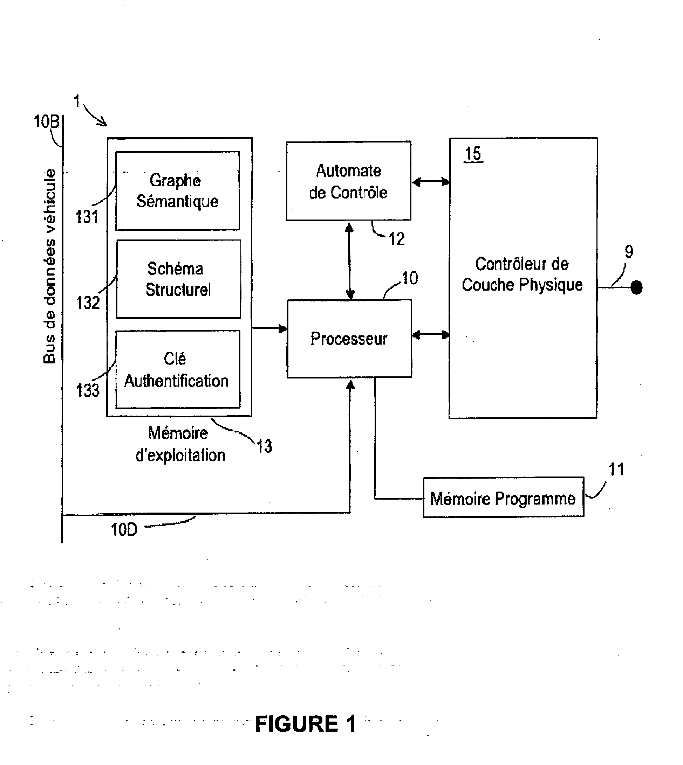

La figure 1 représente un appareil 1 source de données, comprenant une processeur 10 piloté par une mémoire programme 11 et par un automate de contrôle 12. Le processeur 10 est relié à une mémoire d'exploitation 13 qui comporte une zone mémoire 131 pour un graphe sémantique, une zone mémoire 132 pour un schéma structurel et, dans cet exemple, une zone mémoire 133 pour une clé d'authentification.

Le processeur 10 est relié, en entrée à une liaison de données interne 10D, ici d'accès à un bus de données 10B constituant l'ossature d'un réseau local de véhicule automobile, et est relié à une liaison de données externe 9 à travers un port d'un contrôleur de couche physique 15 relié aussi à l'automate de contrôle 12.

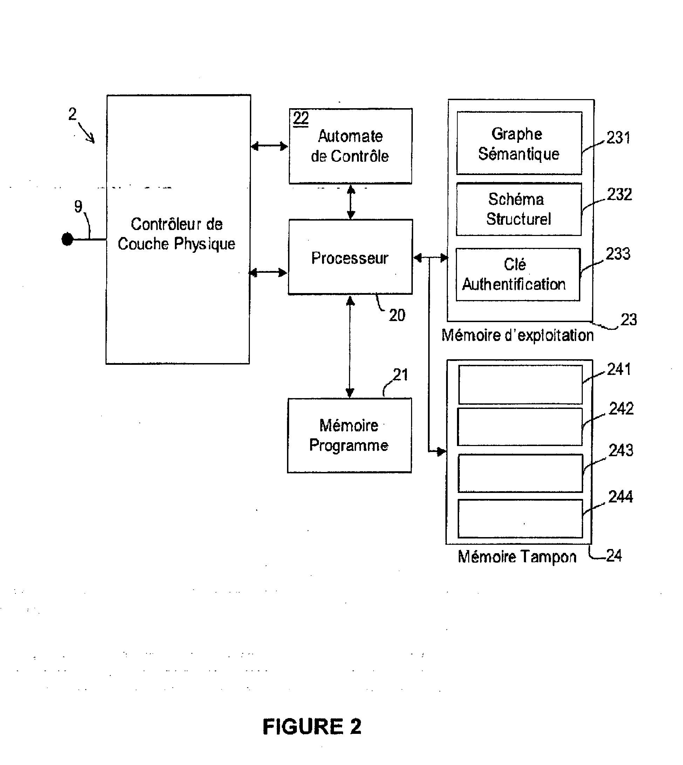

La figure 2 représente un appareil 2, utilisateur de données, comprenant un processeur 20 piloté par une mémoire programme 21 et associé à un automate de contrôle 22. Le processeur 20 est relié à une mémoire d'exploitation 23 qui contient une zone mémoire 231 pour un graphe sémantique, une zone mémoire 232 pour un schéma structurel et une zone mémoire 233 pour une clé d'authentification. Une mémoire tampon 24, reliée au processeur 20, comporte une zone mémoire 241 pour des dénominations d'éléments homologues, une zone mémoire 242 pour leurs adressages respectifs, une zone mémoire 243 pour un algorithme de niveau sémantique qui les relie et une zone mémoire 244 pour un algorithme de niveau syntaxique qui les relie.

Le processeur 20 est relié en entrée à la liaison de données externe 9 à travers un contrôleur de couche physique 25 relié aussi à l'automate de contrôle 22.

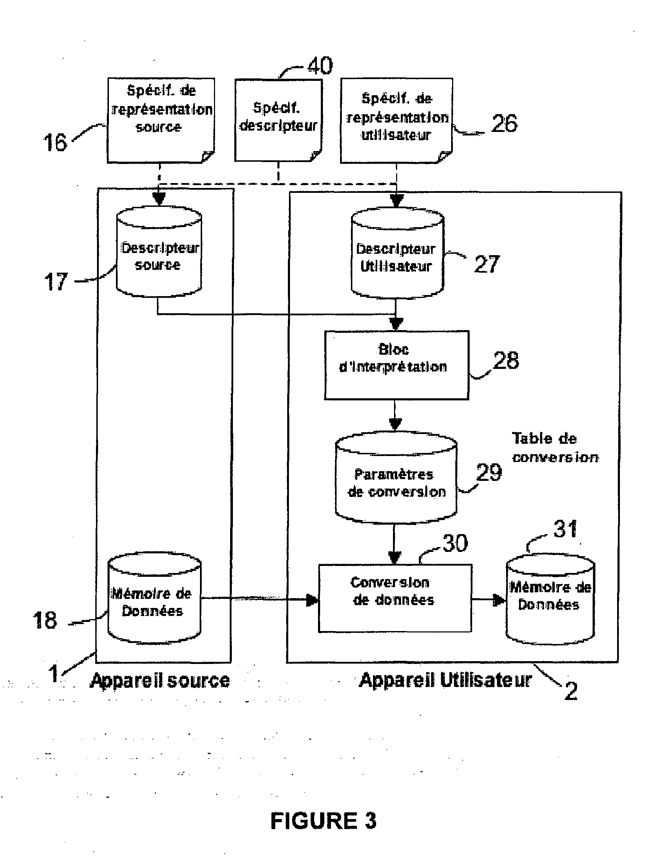

La figure 3 illustre des blocs fonctionnels dont la coopération permet la conversion des données échangées sur la liaison 9, par établissement d'une connexion didactique selon l'invention. A l'appareil source 1 est associée une spécification de représentation source 16, sous forme de document écrit en langage « humain », qui permet d'établir un descripteur source 17, sous forme électronique, du format de représentation des données émises sur la liaison 9. De façon symétrique, l'appareil utilisateur 2 est associé à une spécification de représentation utilisateur 26, sous forme de document écrit en langage « humain », qui permet d'établir un descripteur utilisateur 27, électronique, du format des données que l'appareil utilisateur 2 est apte à traiter. La référence 40 désigne une spécification descripteur, indiquant que le descripteur source 17 et le descripteur utilisateur 27 y sont conformes, c'est-à-dire sont mutuellement compréhensibles afin de pouvoir être comparés.

Le descripteur source 17 et le descripteur utilisateur 27 sont interprétables par machine, si bien qu'une comparaison des deux aboutit à l'élaboration d'un bloc d'interprétation 28 qui construit la méthode de transformation entre les deux spécifications 16, 26. Il est en outre établi, dans cet exemple, un bloc de paramètres de conversion sous forme d'une table de conversion 29. La table de conversion 29 étant établie, on dispose alors des éléments de conversion ici voulus pour élaborer un convertisseur de données 30 reliant une mémoire 18 de données source, ou brutes, de l'appareil source 1, reliée à la liaison interne 10D, à une mémoire de données 31 de l'appareil utilisateur 2.

Les opérations de comparaison ci-dessus sont une sorte de brassage de niveau supérieur, c'est-à-dire physique et surtout logique, allant du descripteur utilisateur 27 au descripteur source 17, ou inversement, selon que les opérations d'établissement du convertisseur de données 30 sont effectuées par l'appareil utilisateur 2 ou par l'appareil source 1. Ce brassage est effectué d'après les différences ou les corrélations entre les descripteurs 17 et 27, perçues grâce à la didactique, interprétable par machine, du descripteur source 17. Le brassage à commande didactique permet, à l'appareil utilisateur 2, d'aller chercher les informations de conversion voulues dans le descripteur source 17 et ainsi de créer l'outil de conversion pour l'adaptation entre ceux-ci. En d'autres termes, le descripteur utilisateur 27, mis à niveau par le convertisseur de données 30, est un émulateur de l'appareil source 1.

Cette comparaison est ici effectuée par le processeur 20, c'est-à-dire que c'est l'appareil 2, requérant les données, qui se charge de consulter le "mode d'emploi" de l'appareil source 1, représenté par le descripteur source 17 qui est mis à disposition des utilisateurs potentiels. Comme indiqué ci-dessus, l'approche inverse est possible, l'appareil utilisateur 2 mettant à disposition son descripteur 27, et requérant que ce soit l'appareil source 1 qui crée le convertisseur de données 30. De façon plus générale, l'outil que constitue le convertisseur de données 30 peut être élaboré par un appareil quelconque, ayant interprété les deux descripteurs 17, 27, et cet outil est ensuite fourni à l'un des deux appareils 1, 2, pour effectuer la conversion voulue sur les données, soit en émission soit en réception.

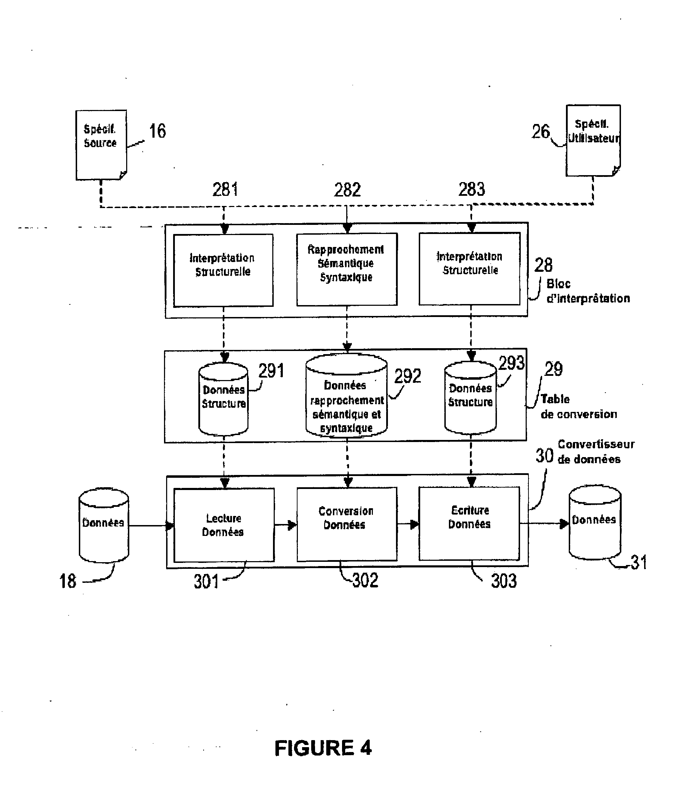

La figure 4 représente le détail des blocs 28, 29 et 30.

Le bloc d'interprétation 28 comporte trois entités, à savoir une entité 281 d'interprétation structurelle du descripteur 17 de l'appareil source 1, c'est-à-dire de commande de lecture de zones de données pertinentes, une entité 282 de rapprochement sémantique et syntaxique entre les deux appareils 1, 2, c'est-à-dire de commande de conversion appropriée, et une entité 283 d'interprétation structurelle du descripteur 27 de l'appareil utilisateur 2, c'est-à-dire de commande d'écriture dans des zones appropriées.

De façon homologue, la table de conversion 29 comporte trois entités, à savoir une entité 291 de données de structure de l'appareil source 1, une entité 292 de données de rapprochement sémantique et syntaxique des deux appareils 1, 2, et une entité 293 de données de structure de l'appareil utilisateur 2.

Le convertisseur de données 30 comporte de même trois entités, à savoir une entité 301 de lecture de données dans la mémoire de données 18 de l'appareil source 1, une entité 302 de conversion des données échangées, et une entité 303 d'écriture des données converties dans une mémoire de données 31 de l'appareil utilisateur 2, ces entités 301 à 303 étant sous la commande des entités respectives 281 à 283.

### Fonctionnement

La connexion didactique s'établit en trois phases.

Une première phase correspond à l'initialisation de la connexion, l'appareil source 1 transférant le descripteur source 17 vers l'appareil utilisateur 2, après éventuellement identification de l'appareil utilisateur 2 auprès de l'appareil source 1, c'est-à-dire authentification.

Une deuxième phase porte sur la préparation de la table de conversion 29, phase dans laquelle le descripteur source 17 est analysé par l'appareil utilisateur 2 pour en déduire la donnée utile requise et en déduire le contenu de la table de conversion 29.

Une troisième phase, d'exploitation, comprend la lecture de la donnée utile voulue par extraction depuis la donnée source, provenant de l'appareil source 1, après adressage de la zone mémoire pertinente, localisée au moyen de la deuxième phase. Cette troisième phase comprend aussi la conversion de cette donnée utile ainsi que son écriture dans la zone mémoire utilisateur de l'appareil source 2.

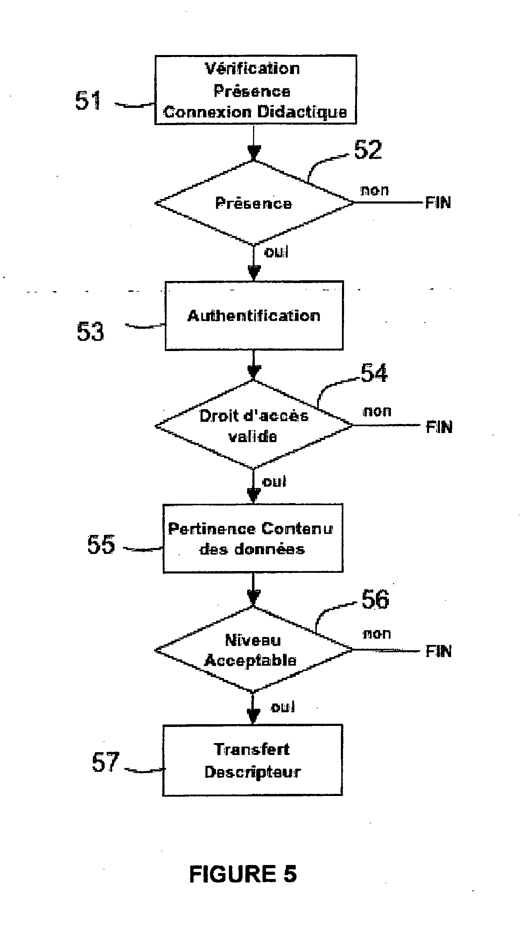

Pour la première phase, la figure 5 est organigramme exposant des étapes d'initialisation de la connexion logique à travers la liaison 9. Après établissement de la liaison 9, au niveau physique, il est effectué une vérification d'identifiants de protocole de communication figurant par exemple dans le descripteur source 17. Le descripteur source 17 est accessible depuis, voire intégré dans, le contrôleur 15 gérant la couche physique du port de la liaison 9, pour vérifier que l'appareil source 1 est équipé de la connexion didactique. Enfin, il peut être vérifié que l'apparei utilisateur 2 peut raccrocher le graphe sémantique 231 de ses données au graphe sémantique 131 de l'appareil source 1, dont les références peuvent figurer dans le descripteur source 17. Il s'agit donc d'une comparaison pour vérifier l'existence d'au moins un minimum de concordance. Il peut être prévu que la connexion didactique permette l'acquisition d'un graphe sémantique externe, par téléchargement.

Ainsi, un bloc fonctionnel 51 représente le point de départ pour dresser un état des lieux, c'est-à-dire rechercher la présence des éléments ci-dessus, servant d'outils pour lire et convertir les données, à une étape 52. Dans toutes les étapes des figures comportant un test, une réponse négative arrête le processus. Dans l'affirmative à l'étape 52, le processus passe à une étape 53 d'authentification de l'appareil utilisateur 2, pour laquelle, à une étape 54, il est vérifié que l'appareil utilisateur 2 a transmis les données voulues pour valider son droit d'accès à l'appareil source 1, et en particulier aux données qu'il contient. En pareil cas, à une étape 55, va être examinée la pertinence du contenu des données source pour déterminer, à une étape 56, si elles présentent un niveau d'intérêt acceptable pour alors transférer le descripteur source 17 vers l'appareil utilisateur 2.

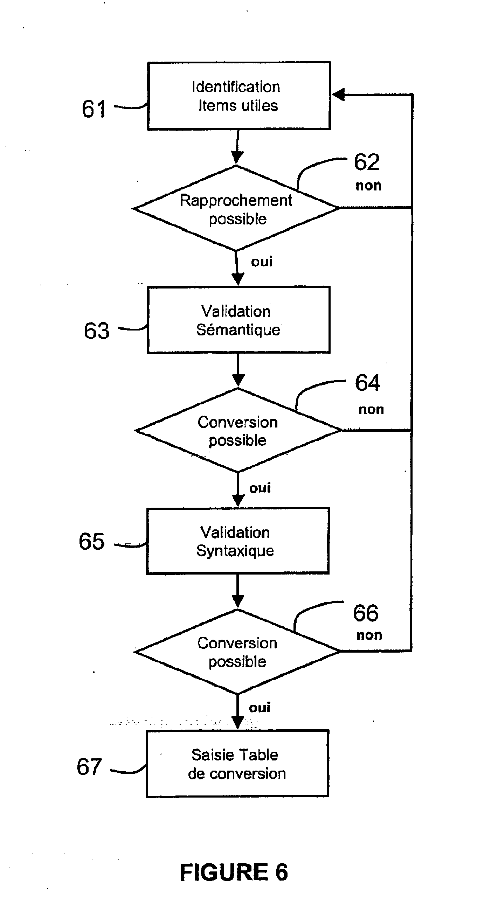

Pour la deuxième phase, la figure 6 est un organigramme illustrant la suite des étapes de la figure 5, c'est-à-dire une séquence de préparation de la table de conversion 29. La connexion didactique parcourt le graphe sémantique source pour rapprocher les dénominations des éléments de données présents dans le graphe sémantique 231 de l'appareil utilisateur 2, de ceux des éléments de données présents dans le graphe sémantique 131 de l'appareil source 1. Dans le cas où un rapprochement de niveau supérieur à un seuil minimal est possible, la connexion didactique consigne les deux dites dénominations à rapprocher, dans la table de conversion 29. La connexion didactique déduit, à partir des graphes sémantiques source et utilisateur 131, 231 et des schémas structurels source et utilisateur 132, 232, les algorithmes de conversion associés 243, 244, respectivement de niveau sémantique et de niveau syntaxique, et elle les consigne dans la table de conversion 29.

Ainsi, une étape initiale 61 porte sur l'identification des éléments utiles à l'appareil utilisateur 2, c'est-à-dire les dénominations des éléments recherchés. A une étape suivante 62, il est lancé un examen pour déterminer s'il est possible d'effectuer un rapprochement entre une dénomination appartenant au graphe sémantique 231 de l'appareil utilisateur 2 et une dénomination appartenant au graphe sémantique 131 de l'appareil source 1. En pareil cas, une validation sémantique est lancée à une étape 63 pour déterminer, à une étape 64, si une conversion est possible. Dans l'affirmative, une validation syntaxique est lancée à une étape 65 pour examiner, à une étape 66, si une conversion est possible. En pareil cas, on passe à une étape 67 de saisie, dans la mémoire tampon 24, de la table de conversion 29 ainsi élaborée.

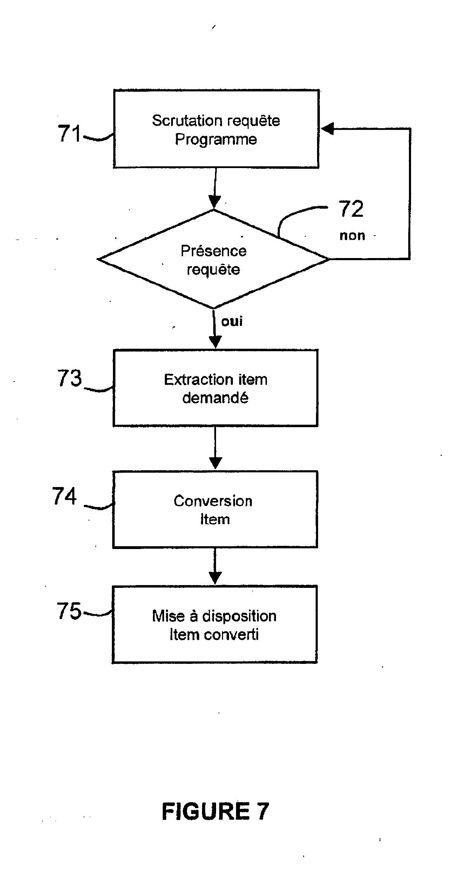

Pour la troisième phase, la figure 7 est un organigramme illustrant des étapes pour la mise à disposition d'un dit élément de données converti, c'est-à-dire la donnée utile. La connexion didactique extrait, du schéma structurel source 132, des adresses de début et de fin d'une zone mémoire de la donnée requise, pour en effectuer la lecture et la conversion.

Ainsi, une étape initiale 71 lance une scrutation du programme en mémoire 21 pour, à une étape 72, détecter la présence d'une requête de mise à disposition d'un élément de donnée converti. Dans l'affirmative, il est procédé, à une étape 73, à l'extraction de l'élément considéré, dans la zone voulue de la mémoire de données source 18, et, à une étape 74, à sa conversion par le convertisseur de données 30, pour un rangement en mémoire de données 31.

### Architecture fonctionnelle de la connexion didactique

La connexion didactique est composée de deux parties, réparties sur les deux appareils 1 et 2.

La fonction d'initialisation de la connexion est ici allouée de la façon suivante : l'appareil source 1 met à disposition les moyens d'identification de la connexion et effectue les fonctions d'authentification au niveau du contrôleur 15. L'appareil utilisateur 2 vérifie la présence de la connexion didactique et fournit des mots de code d'authentification. La fonction de préparation de la table de conversion 29 est allouée de la façon suivante : l'appareil source 1 met à disposition le descripteur source 17 des données source. L'appareil utilisateur 2 le télécharge et en déduit, pour chaque élément de donnée utile et convertible, les paramètres de conversion qui viendront compléter la table de conversion 29 par les données structurelles, syntaxiques et sémantiques ainsi recueillies.

La fonction d'extraction de la donnée est allouée de la façon suivante : l'appareil source 1 transmet en l'état le contenu de la mémoire de données source 18, qui contient la donnée source brute, et il rafraîchit à intervalle voulu sa transmission lorsque la donnée source correspond à un flux de donnée. L'appareil utilisateur 2 extrait et convertit, par le procédé de l'invention, l'ensemble des éléments de données utiles, et il peut aussi traiter uniquement les éléments faisant l'objet d'une requête provenant de la mémoire programme 21.

### Architecture de l'appareil source 1

La connexion didactique est représentée, dans l'appareil source 1, par les fonctions suivantes :
- mise à disposition des paramètres du protocole d'échange à savoir un identifiant de la connexion et une clé d'authentification 133,
- transmission du descripteur source 17 contenant le graphe sémantique source 131 et le schéma structurel source 132, et
- transmission du contenu de la mémoire de données source 18 contenant la donnée source à diffuser.

Un contrôleur gestionnaire source gère des séquences de mise à disposition des informations. Un processeur y reformate les données pour leur transfert sur le contrôleur de couche physique 15, ce dernier pouvant éventuellement être confondu avec le contrôleur gestionnaire source. Le contrôleur 15 peut être chargé de la mise à disposition du descripteur source 17 et de la gestion des fonctions d'authentification, c'est-à-dire servir de frontal. L'appareil source 1 possède les moyens de mémoire voulus (13) pour stocker le descripteur source 17 ainsi que ceux (18) nécessaires à la transmission de la donnée source.

### Architecture de l'appareil utilisateur 2

La connexion didactique est représentée, dans l'appareil, utilisateur 2, par les fonctions suivantes :
- vérification de la présence de la connexion didactique, vérification éventuelle au niveau du graphe sémantique 131 et fourniture des mots de code d'authentification,
- téléchargement du descripteur source 17, identification des éléments de données utiles et initialisation de la table de conversion 29 au moyen des paramètres de conversion recueillis,
- extraction, simultanée ou séquentielle, de l'ensemble des éléments de donnée utiles.

L'appareil utilisateur 2 possède donc les moyens de mémoires voulus (23) pour stocker les paramètres du protocole d'échange et le descripteur utilisateur 27 et ceux (24) voulus pour stocker la table de conversion 29. Le processeur 20 dispose de routines prédéfinies couvrant une majorité de cas de conversion. Il établit ces routines à partir de la table de conversion 29 et les complète éventuellement par les paramètres de conversion qu'elle contient. Le processeur 20 exécute ainsi des routines de conversion telles que décompression, troncature, sur des éléments provenant de la donnée source et met à disposition le résultat dans la mémoire de données 31. Pour les conversions, le contrôleur 25 transmet au processeur 20 des instructions de conversion associées à la donnée extraite. Le processeur 20 exécute ainsi des routines de conversion, telles que décompression, troncature, et met à disposition le résultat en mémoire de données 31. La fonction de lecture et de conversion est associée à un programme d'application logicielle exploitant la donnée mise à disposition.

### Accès à une messagerie

Il s'agit d'une application de l'invention, fournissant une fonction de scrutation de la messagerie d'un bus, ici de véhicule automobile, pour alimenter une base de connaissance d'un appareil de navigation GPS portable. Une connexion didactique équipant ce dernier évite ainsi la nécessité d'y développer une pluralité de pilotes spécifiques, adaptés à chaque modèle de chaque marque d'automobile. Il peut ainsi être prévu de disposer d'un module d'interface équipé de la connexion didactique pour mettre à disposition le descripteur source 17 de trames de messagerie du véhicule ainsi que des données de réseau embarqué. L'appareil, nomade, de navigation GPS peut alors se connecter au module d'interface par une liaison physique par exemple de type USB, ou encore par une liaison sans-fil à courte portée.

Dans un premier temps, un thesaurus du contenu de la messagerie du véhicule est décrit dans un graphe sémantique où il est raccroché à un ou plusieurs thesaurus génériques. Le fichier du graphe sémantique source 131 peut être intégré dans le module ci-dessus ou bien être référencé dans un descripteur du module.

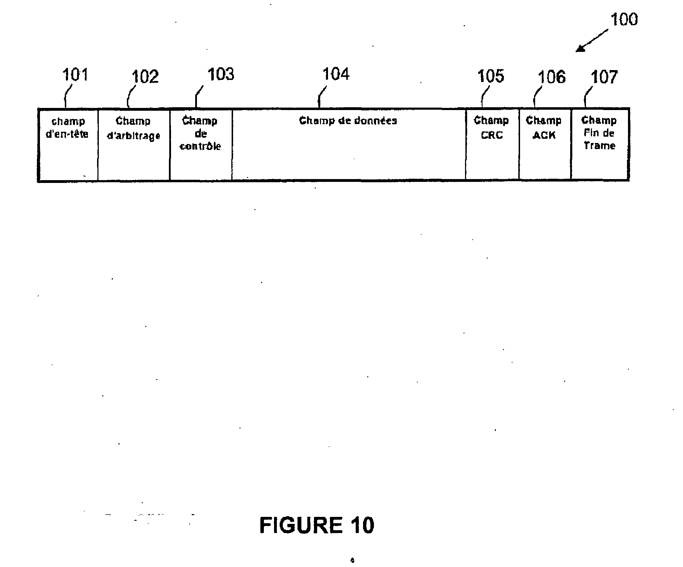

Ensuite, la structure de chaque trame (figure 10) est décrite dans un schéma structurel 132. Chaque trame est reconnue au fil de l'eau, par un identifiant figurant dans le schéma structurel, ainsi que le positionnement exact et la syntaxe de chaque élément de donnée qu'elle contient.

Enfin, un contrôleur USB est configuré de façon à choisir un mode de transmission bien adapté à l'envoi de fichiers en langage interprétable.

Le graphe sémantique 131 et le schéma structurel 132 ainsi constitués sont enregistrés dans le descripteur du module d'interface du véhicule. L'appareil de navigation contient, lui aussi, un descripteur dans lequel les données qui lui sont utiles sont raccrochées à un thesaurus générique de la messagerie automobile dans un graphe sémantique 231.

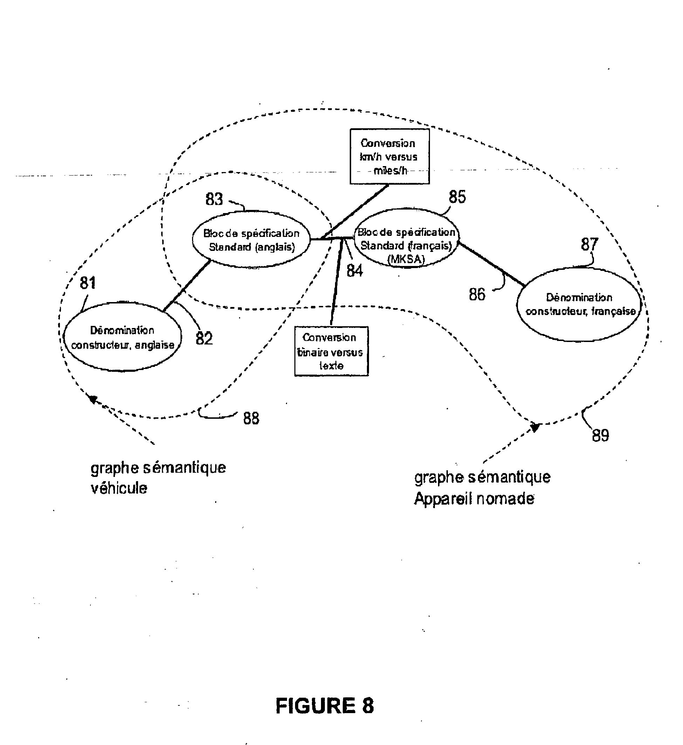

La figure 8 représente une ontologie de messagerie dans le réseau embarqué de véhicule automobile. Cette ontologie est décrite par deux graphes sémantiques distincts qui possèdent un élément ou individu commun, à savoir un graphe sémantique véhicule 88 et un graphe sémantique appareil nomade 89.

Dans le graphe 88, un bloc 81 représente des données spécifiant, selon un format spécifique, des informations de dénomination particulière de vitesse, qui sont associées à des mesures correspondantes (hors la figure 8) que le constructeur de l'automobile a exprimées en unités anglaises, c'est-à-dire en miles par heure. Le bloc 81, qui est un individu d'une ontologie pour un bus de réseau local de véhicule de spécification constructeur, ici anglaise, commande, à travers un lien égalitaire 82, un bloc 83 de spécification standard source, encore anglaise, de cette dénomination particulière de vitesse, toujours associé aux mêmes mesures exprimées en les dites unités anglaises inchangées. Le bloc de spécification standard source 83 commande, à travers un lien conditionné par conversion 84, un bloc 85 de dénomination standard de vitesse, ici française, qui est l'équivalent, pour des termes français, du bloc 83. Le bloc de dénomination standard utilisateur 85 est associé (hors figure 8) à la valeur de la mesure de vitesse convertie, exprimée en unités MKSA, c'est-à-dire en km/heure. Le bloc de vitesse de dénomination standard utilisateur 85 commande, à travers un lien égalitaire 86, un bloc 87 qui est un individu d'une ontologie (graphe 89) pour un bus d'un constructeur de langue française. Le module d'interface du véhicule contient le graphe sémantique 88 recouvrant les blocs 81 et 83, tandis que le graphe sémantique 89 de l'appareil de navigation portable GPS contient les blocs 83, 85 et 87. Le procédé de l'invention permet de rapprocher les éléments de données utiles pour l'appareil dans le module grâce à l'existence, dans les deux graphes 88, 89, du bloc 83 de spécification standard source de la spécification de dénomination de vitesse.

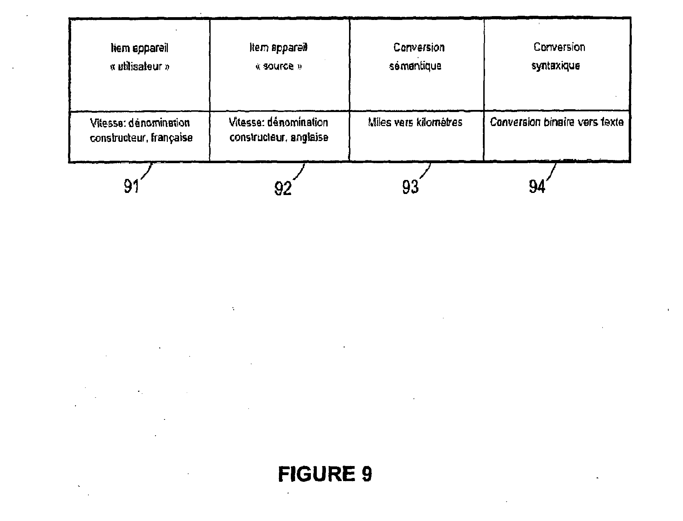

La figure 9 représente un exemple d'une partie de la table de conversion 29, concernant l'élément de dénomination de données vitesse présenté dans la figure 8. Des blocs fonctionnels 91, 92 contiennent les dénominations de l'élément de donnée respectivement pour l'appareil utilisateur 2 (vitesse, en dénomination française) et pour l'appareil source 1 (vitesse, mais en dénomination anglaise). Un bloc fonctionnel 93 contient l'algorithme de conversion sémantique, de miles en kilomètres. Un bloc fonctionnel 94 contient l'algorithme de conversion syntaxique, de binaire en texte.

La figure 10 représente un paquet ou trame 100 de transport d'un dit élément de donnée. La trame 100 comporte un champ d'en-tête 101, contenant un motif spécifique, de reconnaissance de la trame 100, suivi d'un champ d'arbitrage 102, contenant un identifiant de trame, lui-même suivi d'un champ de contrôle 103. On trouve ensuite un champ de données utiles 104, pour le contenu de l'élément de donnée, qui peut, par exemple, être un nombre compris entre 0 et 180 pour une vitesse exprimée en kilomètres par heure. Ce champ est suivi d'un champ de CRC 105, puis d'un champ d'accusé de réception (ACK) et d'un champ de fin de trame.

## Revendications

1. Procédé d'élaboration d'un convertisseur de données (28, 30) entre un appareil source (1), dans lequel des données source ont été stockées selon une spécification de représentation source (16) prédéterminée, et un appareil utilisateur (2) disposant d'une spécification de représentation utilisateur (26) pour l'exploitation de données utilisateur, procédé **caractérisé par le fait que** :
- on établit une paire de descripteurs, respectivement source (17) et utilisateur (27), interprétables par machine, des spécifications de représentation (16, 26) respectivement source et utilisateur, et
- on effectue une comparaison entre le descripteur source (17) et le descripteur utilisateur (27) pour en déterminer une discordance mutuelle servant à établir un bloc (28) d'interprétation des données par machine, comportant des moyens (282) de commande de conversion entre des éléments de données homologues de respectivement le descripteur source (17) et le descripteur utilisateur (27).

2. Procédé selon la revendication 1, dans lequel on établit le bloc d'interprétation (28) en établissant et en y intégrant :
- un premier bloc (281), de commande de lecture des éléments de données source par interprétation d'informations sur leur structure contenues dans le descripteur source (17),
- un deuxième bloc (282), appartenant aux dits moyens de commande de conversion entre des éléments de données homologues, par rapprochement d'informations sémantiques et/ou syntaxiques contenues dans lesdits descripteurs (17, 27) des spécifications, et
- un troisième bloc (283), de commande d'écriture des éléments de données convertis par interprétation d'informations sur leur structure contenues dans le descripteur utilisateur (27).

3. Procédé selon l'une des revendications 1 et 2, dans lequel on établit, en aval du bloc d'interprétation (28), une table (29) de conversion de paramètres.

4. Procédé selon l'une des revendications 1 à 3, dans lequel un schéma structurel des données source (132) est établi afin de servir à l'élaboration du bloc d'interprétation (28).

5. Procédé selon l'une des revendications 2 à 4, dans lequel, pour effectuer le rapprochement d'informations sémantiques, un graphe sémantique (131, 231) est établi pour représenter un lien entre deux thesaurus de respectivement l'appareil source (1) et l'appareil utilisateur (2).

6. Procédé selon la revendication 5, dans lequel, d'après le graphe sémantique (131), il est établi un algorithme de conversion de niveau sémantique (242), qui est intégré dans le bloc d'interprétation (28).

7. Procédé selon l'une des revendications 1 à 6, dans lequel, d'après une paire de schémas structurels respectifs (132, 232) de l'appareil source (1), respectivement utilisateur (2), il est établi un algorithme de conversion de niveau syntaxique (244), qui est intégré dans le bloc d'interprétation (28).

8. Procédé de transfert de données entre un appareil source (1) et un appareil utilisateur (2), **caractérisé par le fait que** :
- on élabore un convertisseur de données (28, 30) au moyen du procédé d'élaboration selon l'une des revendications 1 à 7,
- on établit une connexion entre l'appareil source (1) et l'appareil utilisateur (2), et
- on transfère les données, avec conversion au moyen du dit convertisseur de données (28, 30).

9. Procédé selon la revendication 8, dans lequel au moins une partie des étapes du procédé de transfert de données est effectuée au niveau d'un bloc logique frontal (15) de l'appareil source (1) et / ou d'un bloc logique frontal (25) de l'appareil utilisateur (2).

10. Application du procédé de transfert de données selon l'une des revendications 8 et 9, dans laquelle on accède aux données d'un réseau local (10B) de véhicule motorisé.

11. Application du procédé de transfert de données selon l'une des revendications 8 et 9, dans lequel un lecteur de moyen d'identification effectue une reconnaissance du contenu d'un moyen d'identification par lecture de données source stockées dans celui-ci, avec conversion selon ledit procédé.

12. Application du procédé de transfert de données selon l'une des revendications 8 et 9, dans lequel un appareil source de télécommandes transmet une commande à un appareil utilisateur, la télécommande émise étant convertie par le convertisseur de données (28, 30) pour être exploitable.

13. Équipement de mise en oeuvre du procédé selon l'une des revendications 1 à 7, comportant :
- des moyens de stockage d'une paire de descripteurs, respectivement source (17) et utilisateur (27), interprétables par machine, des spécifications respectivement source (16) et utilisateur (26), et
- des moyens comparateurs (10, 20) agencés pour effectuer une comparaison entre le descripteur source (17) et le descripteur utilisateur (27), et en déterminer une discordance mutuelle servant à établir un bloc (28) d'interprétation des données par machine, comportant des moyens (282) de commande de conversion entre des éléments de données homologues de respectivement le descripteur source (17) et le descripteur utilisateur (27).

14. Équipement selon la revendication 13, en dépendance de la revendication 6, comportant des moyens de corrélation agencés pour établir un dit graphe sémantique (131, 231) et / ou un dit algorithme de conversion de niveau sémantique (243).

15. Produit programme d'ordinateur apte à être téléchargé à travers un réseau de communication et / ou enregistré sur un medium lisible par ordinateur et / ou exécutable par un processeur, **caractérisé par le fait qu'**il comprend des instructions de code de programme pour mettre en oeuvre le procédé d'élaboration d'un convertisseur de données selon l'une des revendications 1 à 7, lorsque le dit programme est exécuté par un ordinateur.

16. Medium de stockage de données lisible par ordinateur, stockant un programme d'ordinateur comprenant un ensemble d'instructions pouvant être exécutées par un ordinateur pour mettre en oeuvre le procédé d'élaboration d'un convertisseur de données selon l'une des revendications 1 à 7.

17. Produit programme d'ordinateur apte à être téléchargé à travers un réseau de communication et / ou enregistré sur un medium lisible par ordinateur et / ou exécutable par un processeur, **caractérisé par le fait qu'**il comprend des instructions de code de programme pour mettre en oeuvre le procédé de transfert de données selon l'une des revendications 8 et 9, lorsque le dit programme est exécuté par un ordinateur.

18. Medium de stockage de données lisible par ordinateur, stockant un programme d'ordinateur comprenant un ensemble d'instructions pouvant être exécutées par un ordinateur pour mettre en oeuvre le procédé de transfert de données selon l'une des revendications 8 et 9.

## Patentansprüche

1. Verfahren zum Gestalten eines Datenkonverters (28, 30) zwischen einem Quellengerät (1), in dem Quelldaten gemäß einer vorbestimmten Quellendarstellungsspezifikation (16) gespeichert wurden und einem Anwendergerät (2), welches über eine Anwenderdarstellungsspezifikation (26) für die Auswertung von Anwenderdaten verfügt,
wobei das Verfahren durch folgende Tatsachen gekennzeichnet ist:
- Festlegen eines Paares von Deskriptoren, jeweils eine Quelle (17) und ein Anwende (27), auslegbar durch eine Maschine, und jeweiliger Quellen- und Anwenderspezifikationen (16, 26), und,
- Durchführen eines Vergleichs zwischen dem Quellendeskriptor (17) und dem Anwenderdeskriptor (27), um eine gegenseitige Diskordanz zu bestimmen, die zum Festlegen eines Blocks (28) zum Auswerten der Daten durch eine Maschine dient, welche Mittel (282) zum Steuern der Konvertierung zwischen homologen Datenelementen des jeweiligen Quellendeskriptors (17) und Anwenderdeskriptors (27) aufweist.

2. Verfahren nach Anspruch 1, bei dem der Block zum Auswerten (28) dadurch festgelegt wird, dass Folgendes darin festgelegt und integriert wird:
- ein erster Block (281) zum Steuern des Lesens der Quellendatenelemente durch Auswertung von Informationen über ihre im Quellendeskriptor (17) enthaltenen Strukturen,
- ein zweiter Block (282), der zu den besagten Mitteln zum Steuern der Konvertierung zwischen homologen Datenelementen gehört, durch einen Abgleich semantische und/oder syntaktische Informationen in den besagten Spezifikationsdeskriptoren (17, 27) umfasst und,
- ein dritter Block (283) zur Steuerung des Schreibens von konvertierten Datenelementen durch Auswertung von im Anwenderdeskriptor (27) enthaltenen Informationen über ihre Struktur.

3. Verfahren nach einem der Ansprüche 1 und 2, bei dem eine Parameterkonvertierungstabelle (29)dem Block zum Auswerten (28) nachgeschaltet ist.

4. Verfahren nach einem der Ansprüche 1 bis 3, bei dem ein Strukturschema der Quelldaten (132) festgestellt wird, um der Gestaltung des Blocks zum Auswerten (28) zu nützen.

5. Verfahren nach einem der Ansprüche 2 bis 4, bei dem, um den Abgleich der semantischen Informationen durchzuführen, ein semantischer Graph (131, 231) festgelegt wird, um eine Verknüpfung zwischen zwei Thesauren, jeweils vom Quellengerät (1) und dem Anwendergerät (2), darzustellen.

6. Verfahren nach Anspruch 5, bei dem gemäß dem semantischen Graph (131) ein Algorithmus der Konvertierung des semantischen Niveaus (242) festgelegt wird, der im Block der Auswertung (28) integriert ist.

7. Verfahren nach einem der Ansprüche 1 bis 6, bei dem nach einem Paar jeweiliger struktureller Schemastrukturen (132, 232), des Quellengeräts (1) bzw. des Anwenders (2), ein Algorithmus der Konvertierung des syntaktischen Niveaus (244) aufgestellt wird, der im Block der Auswertung (28) integriert ist.

8. Verfahren zur Datenübertragung zwischen einem Quellengerät (1) und einem Anwendergerät (2), **gekennzeichnet durch**:
- Gestalten eines Datenkonverters (28, 30) mit Hilfe des Gestaltungsverfahrens nach einem der Ansprüche 1 bis 7,
- Festlegen einer Verbindung zwischen dem Quellengerät (1) und dem Anwendergerät (2) und,
- Übertragen der Daten nebst Konvertierung mit Hilfe des besagten Datenkonverters (28, 30).

9. Verfahren nach Anspruch 8, bei dem wenigstens ein Teil der Schritte des Verfahrens zur Datenübertragung auf dem Niveau eines frontalen logischen Blocks (15) des Quellengerätes (1) und/oder eines frontalen logischen Blocks (25) des Anwendergerätes (2) durchgeführt wird.

10. Verwendung des Verfahrens zur Datenübertragung nach einem der Ansprüche 8 und 9, bei der man zu den Daten eines örtlichen Netzes (10B) motorisierte Fahrzeuge gelangt.

11. Verwendung des Verfahrens zur Datenübertragung nach einem der Ansprüche 8 und 9, bei der ein Lesegerät von Identifizierungsmitteln eine Erkennung des Inhalts eines Identifizierungsmittels durch Lesen der darin gespeicherten Quelldaten mit Konvertierung nach dem besagten Verfahren durchführt.

12. Verwendung des Verfahrens zur Datenübertragung nach einem der Ansprüche 8 und 9, bei der ein Fernsteuerungsquellengerät einem Anwendergerät einen Befehl übermittelt, wobei die Fernsteuerung konvertiert durch den Datenkonvertierer (28, 30) gesendet wird, um verwertbar zu sein.

13. Einrichtung zur Ausführung des Verfahrens nach einem der Ansprüche 1 bis 7, umfassend:
- Mittel zum Speichern eines Paares von Deskriptoren, jeweils einer Quelle (17) und eines Anwenders (27), auswertbar durch eine Maschine, der Quellenspezifikationen (16) bzw. Anwenderspezifikationen (26), und
- Vergleichsmittel (10, 20), die zum Durchführen eines Vergleichs zwischen dem Quellendeskriptor (17) und dem Anwenderdeskriptor (27) angeordnet sind, und zum Bestimmen einer gegenseitigen Diskordanz nützen, zum Festlegen eines Blocks (28) zum Auswerten der Daten durch eine Maschine, welche Mittel (282) zum Steuern der Konvertierung zwischen homologen Datenelementen des Quellendeskriptors (17) bzw. des Anwenderdeskriptors (27)aufweist.

14. Einrichtung nach Anspruch 13, in Abhängigkeit von Anspruch 6, welche Korrelationsmittel aufweist, die so angeordnet sind, um einen besagten semantischen Graphen (131, 231) und/oder einen besagten Algorithmus zum Konvertieren des semantischen Niveaus (243) festzulegen.

15. Computerprogrammprodukt, das geeignet ist über ein Kommunikationsnetz heruntergeladen zu werden und/oder auf einem mit einem Computer lesbaren Medium gespeichert zu werden und/oder durch einen Prozessor ausführbar ist, **dadurch gekennzeichnet, dass** es Programmcodeanweisungen umfasst, um das Verfahren zum Gestalten eines Datenkonverters nach einem der Ansprüche 1 bis 7 anzuwenden, wenn das besagte Programm von einem Computer ausgeführt wird.

16. Speichermittel für Daten, die mit einem Computer lesbar sind, welches ein Computerprogramm speichert, das einen Anweisungssatz umfasst, der von einem Computer ausgeführt werden kann, um das Verfahren zum Aufstellen eines Datenkonverters nach einem der Ansprüche 1 bis 7 anzuwenden.

17. Computerprogrammprodukt, das geeignet ist über ein Kommunikationsnetz heruntergeladen und/oder auf einem mit einem Computer lesbaren Medium gespeichert zu werden und/oder durch einen Prozessor ausführbar ist, **dadurch gekennzeichnet, dass** es Programmcodeanweisungen umfasst, um das Verfahren nach einem der Ansprüche 8 und 9 anzuwenden, wenn das besagte Programm von einem Computer ausgeführt wird.

18. Speichermittel für Daten, die mit einem Computer lesbar sind, welches ein Computerprogramm speichert, welches einen Anweisungssatz umfasst, der von einem Computer ausgeführt werden kann, um das Verfahren zur Datenübertragung nach einem der Ansprüche 8 und 9 anzuwenden.

## Claims

1. A method for designing a data converter (28, 30) between a source device (1), in which source data has been stored according to a predetermined source representation specification (16), and a user device (2) having a user representation specification (26) for using user data, which method is **characterised in that**:
- a pair of machine-interpretable descriptors, source (17) and user (27), respectively, is established for the representation specifications (16, 26) for the source and user, respectively; and
- a comparison is made between the source descriptor (17) and the user descriptor (27) so as to determine a mutual discordance used to establish a block (28) for the machine interpretation of data, comprising means (282) for controlling conversion between homologous data elements of said source descriptor (17) and said user descriptor (27), respectively.

2. The method according to claim 1, wherein said interpretation block (28) is established by establishing and integrating therein:
- a first block (281) for controlling the reading of the source data elements by interpreting information relating to their structure, which information is contained in said source descriptor (17);
- a second block (282), which belongs to said means for controlling conversion between homologous data elements, for matching semantic and/or syntactic information contained in said specifications descriptors (17, 27); and
- a third block (283) for controlling the writing of the converted data elements by interpreting information relating to their structure, which information is contained in said user descriptor (27).

3. The method according to any one of claims 1 to 2, wherein a parameter conversion table (29) is established downstream of said interpretation block (28).

4. The method according to any one of claims 1 to 3, wherein a structural scheme of the data sources (132) is established so as to be used in the design of said interpretation block (28).

5. The method according to any one of claims 2 to 4, wherein, in order to match semantic information, a semantic graph (131, 231) is established to represent a link between two thesauruses of said source device (1) and said user device (2), respectively.

6. The method according to claim 5, wherein, according to the semantic graph (131), a semantic level conversion algorithm (242) is established, which algorithm is included in said interpretation block (28).

7. The method according to any one of claims 1 to 6, wherein, according to a pair of respective structural schemes (132, 232) of said source (1) and user (2) device, respectively, a syntactic level conversion algorithm (244) is established, which algorithm is included in said interpretation block (28).

8. A method for transferring data between a source device (1) and a user device (2), **characterised in that**:
- a data converter (28, 30) is designed by means of the design method according to any one of claims 1 to 7;
- a connection is established between said source device (1) and said user device (2); and
- the data is transferred with conversion by means of said data converter (28, 30).

9. The method according to claim 8, wherein at least part of the steps of the data transfer method is carried out on a frontal logic block (15) of said source device (1) and/or a frontal logic block (25) of said user device (2).

10. The application of the data transfer method according to any one of claims 8 to 9, wherein the data in a local network (10B) of a motor vehicle is accessed.

11. The application of the data transfer method according to any one of claims 8 to 9, wherein an identification means reader searches the content of an identification means by reading source data stored therein, with conversion according to said method.

12. The application of the data transfer method according to any one of claims 8 to 9, wherein a source remote-control device transmits a command to a user device, with the transmitted remote-control being converted by said data converter (28, 30) so that it can be used.

13. Equipment for implementing the method according to any one of claims 1 to 7, comprising:
- means for storing a pair of machine-interpretable descriptors, source (17) and user (27), respectively, for the specifications (16, 26) for the source and user, respectively; and
- comparing means (10, 20) arranged so as to carry out a comparison between said source descriptor (17) and said user descriptor (27), and to determine a mutual discordance used to establish a block (28) for the machine interpretation of data, comprising means (282) for controlling conversion between homologous data elements of said source descriptor (17) and said user descriptor (27), respectively.

14. The equipment according to claim 13, as dependent on claim 6, comprising correlation means arranged so as to establish one of said semantic graphs (131, 231) and/or one of said semantic level conversion algorithms (243).

15. A computer program product that can be downloaded through a communication network and/or recorded on a computer-readable medium and/or executed by a processor, **characterised in that** it comprises program code instructions for implementing the method for designing a data converter according to any one of claims 1 to 7 when said program is executed by a computer.

16. A medium for storing computer-readable data, storing a computer program comprising a set of instructions that can be executed by a computer to implement the method for designing a data converter according to any one of claims 1 to 7.

17. A computer program product that can be downloaded through a communication network and/or recorded on a computer-readable medium and/or executed by a processor, **characterised in that** it comprises program code instructions for implementing the data transfer method according to any one of claims 8 to 9 when said program is executed by a computer.

18. A computer-readable data storage medium, storing a computer program comprising a set of instructions that can be executed by a computer to implement the data transfer method according to any one of claims 8 to 9.
